# EUROPEAN PATENT APPLICATION

(11) **EP 1 630 131 A1**
(43) Date of publication of application: **01.03.2006**
(21) Application number: 05076792.0
(22) Date of filing: 03.08.2005
(51) Int. Cl.: C01B 3/38, C01B 3/48, C01B 3/58, H01M 8/06, F01N 3/023, F01N 3/035, F01N 3/08, B01D 53/94

(54) **A reformer system, a method of producing hydrogen in the reformer system, and a method of using the reformer system**

(30) Priority: 25.08.2004 US 925809
(71) Applicant: Delphi Technologies, Inc., Troy, MI 48007 (US)
(72) Inventor: Tan, Cher-Dip, Tulsa, OK 74158 (US); Kirwan, John E., Troy, MI 48094 (US); Weissman, Jeffrey G., Broken Arrow, OK 74014 (US); Bonadies, Joseph V., Clarkston, MI 48348 (US)
(74) Representative: Denton, Michael John

(57) **Abstract**

A reformer system (100, 200) comprises a reformer catalyst capable of reforming a fuel to hydrogen and carbon monoxide, and a water gas shift catalyst in fluid communication with the reformer catalyst and in fluid communication with an exhaust gas source comprising water, wherein the water gas shift catalyst is capable of reacting carbon monoxide with the water to produce hydrogen and carbon dioxide.

## Description

### BACKGROUND OF THE INVENTION

A reformer, which can also be referred to as a fuel processor, can convert a hydrocarbon fuel (methane, propane, natural gas, gasoline, diesel, gas oils, oxygenated hydrocarbons, and the like) to hydrogen or to a less complex hydrocarbon. More particularly, fuel reforming can comprise mixing a hydrocarbon fuel with air, water, and/or steam in a mixing zone of the reformer prior to entering a reforming zone of the reformer, and converting the hydrocarbon fuel into, for example, hydrogen (H₂), byproducts (e.g., carbon monoxide (CO), methane (CH₄), inert materials (e.g., nitrogen (N₂), carbon dioxide (CO₂), and water (H₂O)). Common approaches include steam reforming, partial oxidation, and dry reforming.

Steam reforming involves the use of a fuel and steam (H₂O) that is reacted in heated tubes filled with a catalyst to convert the hydrocarbons into primarily hydrogen and carbon monoxide. The steam reforming reactions are endothermic, thus the steam reformers are designed to transfer heat into the catalytic process. An example of the steam reforming reaction is as follows:

CH₄ + H₂O → CO + 3H₂

Partial oxidation reformers are based on substoichiometric combustion to achieve temperatures sufficient to reform the hydrocarbon fuel. Decomposition of the fuel to primarily hydrogen and carbon monoxide occurs through thermal reactions at high temperatures, e.g., temperatures of about 700°C to about 1,200°C. Catalysts have been used with partial oxidation systems (catalytic partial oxidation) to promote conversion of various fuels into synthesis gas. The use of a catalyst can result in acceleration of the reforming reactions and can provide this effect at lower reaction temperatures than those that would otherwise be required in the absence of a catalyst. An example of the partial oxidation reforming reaction is as follows:

CH₄ + ½O₂ → CO + 2H₂

Dry reforming involves the creation of hydrogen and carbon monoxide in the absence of water, for example, using carbon dioxide as the oxidant. Dry reforming reactions, like steam reforming reactions, are endothermic processes. An example of the dry reforming reaction is depicted in the following reaction:

CH₄ + CO₂ → 2CO + 2H₂

Practically, reformers can comprise a combination of these idealized processes.

In all of the reforming processes described above, the reformer produces synthesis gas, i.e., a gas comprising primarily carbon monoxide (CO) and hydrogen gas (H₂). For example, greater than or equal to 80% of the total volume of reformate is hydrogen and carbon monoxide, with greater than or equal to 90% obtainable. In various applications, it can be desirable to remove the carbon monoxide from the reformate and increase the hydrogen gas concentration in the reformate.

One method of removing carbon monoxide while increasing the hydrogen gas concentration in the reformate is water gas shift (WGS), wherein water is reacted with carbon monoxide in a WGS reactor to produce carbon dioxide and hydrogen gas. An example of the water gas shift reaction is as follows:

CO + H₂O → CO₂ + 3H₂

For "on-board" vehicle applications, however, supplying the necessary water for the WGS reaction can be problematic. For example, water from an external water supply stored in an on-board water tank and heated to produce steam using an on-board steam generator can complicate the vehicle system design.

What is needed in the art is a system and method for supplying water for WGS reactions in an "on-board" application without having to employ an external water supply.

### SUMMARY OF THE INVENTION

Disclosed herein are reforming systems, methods of producing on-board hydrogen in the reforming system, and methods of using the reforming system.

One embodiment a reformer system comprises a reformer catalyst capable of reforming a fuel to hydrogen and carbon monoxide, and a water gas shift catalyst in fluid communication with the reformer catalyst and in fluid communication with an exhaust gas source comprising water, wherein the water gas shift catalyst is capable of reacting carbon monoxide with the water to produce hydrogen and carbon dioxide.

One embodiment of a method of producing hydrogen in a reformer system comprises supplying a fuel to a reformer catalyst; supplying exhaust bleed comprising water from an exhaust source to the reformer catalyst; reforming the fuel using the reformer catalyst to produce hydrogen and carbon monoxide; and reacting the carbon monoxide with the water from the exhaust bleed using a water gas shift catalyst disposed in fluid communication with and downstream of the reformer catalyst to produce carbon dioxide and hydrogen.

One embodiment of a method of using a reformer system comprises supplying a fuel to a reformer catalyst; supplying exhaust bleed comprising water from an exhaust source to the reformer catalyst; reforming the fuel using the reformer catalyst to produce hydrogen and carbon monoxide; reacting the carbon monoxide with the water from the exhaust bleed using a water gas shift catalyst disposed in fluid communication with and downstream of the reformer catalyst to produce carbon dioxide and hydrogen; supplying the hydrogen and an oxidant to a fuel cell; and generating electricity using the fuel cell.

Another embodiment of a method of using a reformer system comprises supplying a fuel to a reformer catalyst; supplying exhaust bleed comprising water to the reformer catalyst; reforming the fuel using the reformer catalyst to produce hydrogen and carbon monoxide; reacting the carbon monoxide with the water from the exhaust bleed using a water gas shift catalyst disposed in fluid communication with and downstream of the reformer catalyst to produce carbon dioxide and hydrogen; and supplying the hydrogen to an oxidation catalyst, a particulate filter, a NO_{X} adsorber, or a SCR catalyst to selectively regenerate each of the foregoing.

A third embodiment of a method of using a reformer system comprises supplying a fuel to a reformer catalyst; supplying exhaust bleed comprising water from an exhaust source to the reformer catalyst; reforming the fuel using the reformer catalyst to produce hydrogen and carbon monoxide; reacting the carbon monoxide with the water from the exhaust bleed using a water gas shift catalyst disposed in fluid communication with and downstream of the reformer catalyst to produce carbon dioxide and hydrogen; and supplying the hydrogen to an on-board ammonia generator to produce ammonia.

The above-described and other features will be appreciated and understood by those skilled in the art from the following detailed description, drawings, and appended claims.

### BRIEF DESCRIPTION OF THE DRAWINGS

Refer now to the figures, which are exemplary embodiments and wherein like elements are numbered alike.
Figure 1 is a schematic view of an embodiment of a vehicle exhaust system.
Figure 2 is a schematic view of an embodiment of a vehicle exhaust/fuel cell system.
Figure 3 is a graphical illustration of reformer temperature as a function of oxygen to fuel-carbon ratio (OCR).
Figure 4 is a graphical illustration comparing the water availability in reformate with and without an exhaust bleed feed to a reformer.
Figure 5 is a graphical illustration comparing the carbon monoxide concentration in an outlet stream of water gas shift reactor that is in fluid communication with a reformer with and without an exhaust bleed feed to the reformer.

### DESCRIPTION OF THE PREFERRED EMBODIMENT

It should first be noted that the reformer disclosed herein can readily be adapted for use in any system where hydrocarbon fuels are processed to hydrogen or less complex hydrocarbons, such as a fuel cell system (e.g., solid oxide fuel cell (SOFC) system, proton exchange membrane (PEM) system, and the like), an internal combustion engine system (e.g., an engine system fueled with diesel fuel, gasoline, and the like), chemical processes employing hydrogen as a reactant, and the like. Additionally, it is noted that the reformer can be employed in stationary applications and can desirably also be employed in mobile applications, e.g., "on-board" applications. The term "on-board" is used herein to generically describe the production of a given component (e.g., reformate) within a vehicle (e.g., automobile, truck, etc.) system. The term "water gas shift (WGS) reactor" is herein to generically describe a system component (e.g., a device) comprising a water gas shift catalyst, i.e., a catalyst employed in converting carbon monoxide and water to carbon dioxide and hydrogen gas.

The term "direct" fluid communication is also used throughout this disclosure. The term "direct" as used herein refers to a communication between a first point and a second point in a system that is uninterrupted by the presence of reaction devices, such as, a reactor, converter, and the like, but can have other devices such as valves, mixers, flow regulators, sensors and the like, that are generally not used for purposes of reacting exhaust gases or selectively removing components from an exhaust gas. Additionally, the term "serial" fluid communication is used herein generally to refer to fluid flow through a given device in the order specified in that series. It is additionally noted that, where valves are discussed and illustrated, the valves can divert all or a portion of the flow to each conduit connected to the exiting of the valve, i.e., the valve disposes various devices in selective communication.

It should further be noted that the terms "first," "second," and the like herein do not denote any order or importance, but rather are used to distinguish one element from another, and the terms "a" and "an" herein do not denote a limitation of quantity, but rather denote the presence of at least one of the referenced items. Furthermore, all ranges disclosed herein are inclusive and combinable (e.g., ranges of "up to about 25 weight percent (wt.%), with about 5 wt.% to about 20 wt.% desired, and about 10 wt.% to about 15 wt.% more desired," are inclusive of the endpoints and all intermediate values of the ranges, e.g., "about 5 wt.% to about 25 wt.%, about 5 wt.% to about 15 wt.%", etc.).

Several combinations of exhaust treatment devices (e.g., catalytic converters, three-way reduction catalysts, oxidation catalysts, particulate filters, catalyzed particulate filters, NO_{X} catalysts, NO_{X} adsorbers, combinations of the foregoing, and the like) are discussed hereunder with references to individual figures. One of skill in the art can easily recognize that many of the devices of each of the embodiments are similar to or identical to each other. These various devices can be added or omitted based on various design choices. As such, various elements and/or features can be introduced in a given figure with the understanding that the systems can be modified as taught herein to include features illustrated in other embodiments. Each of these elements is first introduced in the discussion of a given figure, but is not repeated for each embodiment. Rather, distinct structure is discussed relative to each figure/embodiment.

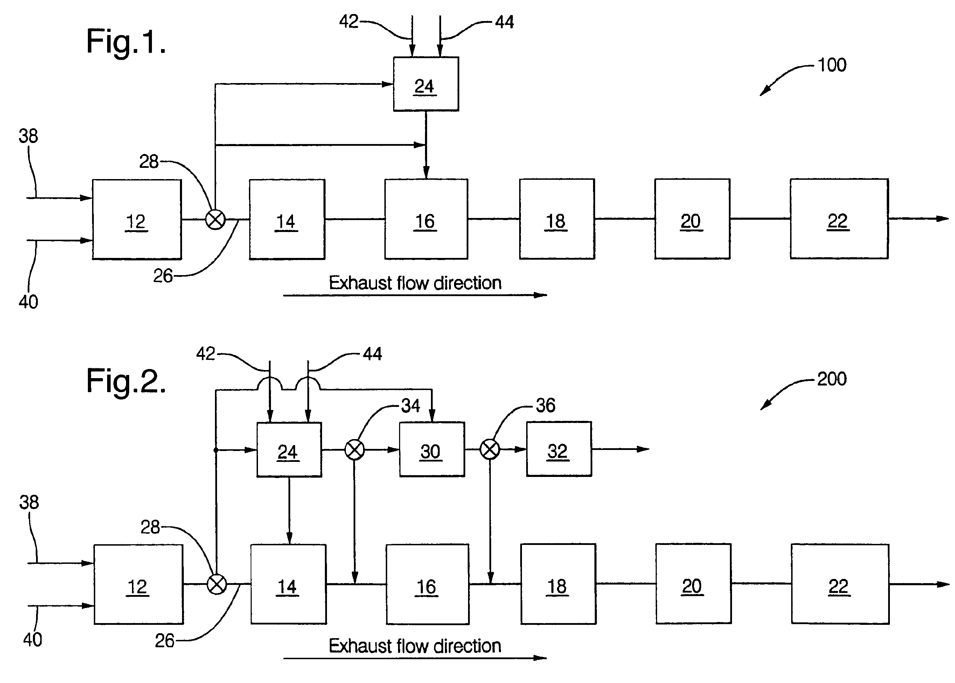

Referring now to Figure 1, a vehicle system generally designated 100 is illustrated. While the location, number, and size, of each component can vary depending on the application, this figure provides a starting point for discussion. The vehicle system 100 comprises an engine 12. While the engine 12 can be a gasoline engine or a diesel engine, the system illustrated herein is especially desirable for diesel engine systems. Disposed in fluid communication with engine 12 are an oxidation catalyst 14, a particulate filter 16, a NO_{X} adsorber 18, a selective catalytic reduction (SCR) catalyst 20, and an oxidation catalyst 22. An arrow labeled "exhaust flow direction" indicates the general flow of the exhaust in an exhaust conduit 26. The exhaust conduit 26 is in fluid communication with each component in the system. For example, in an exemplary embodiment, the general directional flow of exhaust gas from the engine 12 can be through first oxidation catalyst 14, particulate filter 16, NO_{X} adsorber 18, SCR catalyst 20, and oxidation catalyst 22. After passing through oxidation catalyst 22, the exhaust gas can then be discharged into an external environment.

Oxidation catalyst 14 comprises a catalytic metal(s), support material(s), and a substrate(s) disposed with a housing. Optionally, a retention material can be disposed between the substrate and the housing. The catalytic metal and support material can be disposed on/in/throughout the substrate (hereinafter "on" the substrate for convenience in discussion). For example, the catalytic metal and support material can be washcoated, imbibed, impregnated, physisorbed, chemisorbed, precipitated, or otherwise applied onto and/or within the substrate. Examples of catalytic metals include, but are not limited to, platinum, palladium, ruthenium, rhodium, iridium, gold, and silver, as well as oxides, alloys, salts, and mixtures comprising at least one of the foregoing metals.

The catalytic metal of oxidation catalyst 14 can comprise, for example, up to about 95 wt.% platinum (e.g., about 60 wt.% to about 95 wt.%, with about 70 wt.% to about 95 wt.% preferred) and up to about 50 wt.% palladium and/or rhodium (e.g., about 10 wt.% to about 50 wt.%, with about 10 wt.% to about 30 wt.% preferred), based on the total weight of catalytic metal(s).

Suitable supports for oxidation catalyst 14 include, but are not limited to, gamma aluminum oxide, delta aluminum oxide, theta aluminum oxide, stabilized aluminum oxides, titanium oxides, zirconium oxides, yttrium oxides, lanthanum oxides, cerium oxides, scandium oxides, and the like, as well as combinations comprising at least one of the foregoing. Particularly, a mixture of lanthanum stabilized (gamma or delta phase) aluminum oxide, a titanium-zirconium solid solution, or a combination comprising at least one of these support materials can be employed.

The support material(s) can be employed at about 0.5 grams per cubic inch (g/in³) (about 0.03 grams per cubic centimeter (g/cm³)) to about 6.0 g/in³ (about 0.4 g/cm³), based on the volume of the substrate. For example, the support materials can be employed at about 1.0 g/in³ (about 0.06 g/cm³) to about 5.0 g/in³ (about 0.3 g/cm³), with about 2.0 g/in³ (about 0.1 g/cm³) to about 4.0 g/in³ (about 0.2 g/cm³) preferred. The catalytic metal loadings can comprise about 0.005 wt.% to about 25.0 wt.%, wherein the weight percent is based on the total weight of the support material(s) and catalytic metal(s).

The substrate can comprise any material designed for use in a spark ignition or diesel engine environment and having the following characteristics: (1) capable of operating at temperatures up to about 600°C; (2) capable of withstanding exposure to hydrocarbons, nitrogen oxides, carbon monoxide, particulate matter (e.g., soot and the like), carbon dioxide, and/or sulfur; and (3) having sufficient surface area and structural integrity to support a catalyst. Suitable materials for the substrate include, but are not limited to, cordierite, mullite, alpha-aluminum oxide, aluminum phosphate, aluminum titanate, aluminosilicate, zirconium oxide, titanium oxide, titanium phosphate and/or magnesium silicate. Additionally, it is noted that the substrate can be metallic, ceramic, or combinations of the foregoing, and be in a physical form as extrudates, foams, pellets, wire assemblies, filters, meshes, foils, and the like.

Although the substrate can have any size or geometry, the size and geometry are preferably chosen to optimize surface area in the given exhaust emission control device design parameters. For example, the substrate can have a honeycomb geometry, with the combs through-channel having any multi-sided or rounded shape, with substantially square, triangular, pentagonal, hexagonal, heptagonal, octagonal, or similar geometries preferred due to ease of manufacturing and increased surface area. For example, in an embodiment, the substrate can have an extruded honeycomb cell geometry comprising greater than or equal about 400 cells per square inch, and a wall thickness of less than or equal to about 8.0 mils (about 0.02 cm).

The choice of material for the housing depends upon the type of exhaust gas, the maximum temperature reached by the substrate, the maximum temperature of the exhaust gas stream, and the like. Suitable materials for the housing can comprise any material that is capable of resisting under-car salt, temperature, and corrosion. For example, ferrous materials can be employed such as ferritic stainless steels. Ferritic stainless steels can include stainless steels such as, e.g., the 400 - Series such as SS-409, SS-439, and SS-441, with grade SS-409 generally preferred.

Located between the substrate and the housing can optionally be a retention material that insulates the housing from both the exhaust gas temperatures and the exothermic catalytic reaction(s) occurring within the catalyst substrate. The retention material, which enhances the structural integrity of the substrate by applying compressive radial forces about it, reducing its axial movement and retaining it in place, can be concentrically disposed around the substrate to form a retention material/substrate subassembly.

The retention material, which can be in the form of a mat, particulates, or the like, can be an intumescent material (e.g., a material that comprises vermiculite component, i.e., a component that expands upon the application of heat), a non-intumescent material, or a combination thereof. These materials can comprise ceramic materials (e.g., ceramic fibers) and other materials such as organic and inorganic binders and the like, or combinations comprising at least one of the foregoing materials. Non-intumescent materials include materials such as those sold under the trademarks "NEXTEL" and "INTERAM 1101HT" by the "3M" Company, Minneapolis, Minnesota, or those sold under the trademark, "FIBERFRAX" and "CC-MAX" by the Unifrax Co., Niagara Falls, New York, and the like. Intumescent materials include materials sold under the trademark "INTERAM" by the "3M" Company, Minneapolis, Minnesota, as well as those intumescents which are also sold under the aforementioned "FIBERFRAX" trademark, as well as combinations thereof and others.

The particulate filter 16 can comprise any filter design capable of removing particulate matter from the exhaust stream and preventing the emission of such particulate matter into the atmosphere. Preferably, the particulate filter 16 comprises a gas permeable ceramic material having a honeycomb structure comprising a plurality of channels. The channels can be divided into alternating inlet channels and exit channels. The inlet channels are open at an inlet end of the particulate filter and are plugged at the exit end of the particulate filter. Conversely, exit channels are plugged at the inlet end and open at the exit end of the particulate filter. The inlet and exit channels are separated by porous sidewalls, that permit the exhaust gases to pass from the inlet channels to the exit channels along their length.

The particulate filter 16 generally comprises a housing, a retention material, and a filter element (e.g., substrate). Materials for the housing and the retention material can include those listed above with regard to oxidation catalyst 14.

The filter element of particulate filter 16 is generally desired to filter out the particulate matter present in the exhaust. It can be manufactured from materials such as ceramics such as cordierite, metallics such as sintered stainless steel powder, carbides (such as silicon carbide), nitrides (such as silicon nitride), and the like, as well as combinations comprising at least one of the foregoing materials. Such materials preferably possess a sufficient porosity to permit the passage of exhaust gas and/or reformate through the element walls, and yet filter out a substantial portion, if not all of the particulate matter present in the exhaust gas. The filter element has greater than or equal to about 20% porosity and preferably greater than or equal to about 40% porosity. The filter pores through the filter element have a major diameter of about 0.1 micrometer to about 30 micrometers, with about 0.4 micrometers to 20 micrometers preferred.

The particulate filter element can optionally include a catalyst on the filter element (e.g., a coating of a catalyst material). Preferably, the catalyst material performs a reforming function, e.g., a water gas shift catalyst (WGS) that converts carbon monoxide and water into hydrogen and carbon dioxide. The WGS shift catalyst can comprise a catalyst metal(s) and a support material(s). Examples of WGS catalyst metals include platinum, palladium, rhodium, ruthenium, nickel, iridium, cobalt, copper, gold, iron, silver, their oxides, and the like as well as combinations comprising at least one of the foregoing metals and/or their oxides. Suitable support materials include those discussed above with respect to oxidation catalyst 14. Preferably, the support materials include aluminum oxide, silicon oxide, zirconium oxide, titanium oxide, zinc oxide, and the like, as well as combinations comprising at least one of the following, and can optionally be modified with an alkali or alkaline earth element, such as cesium or rubidium. In an embodiment, the WGS catalyst comprises a platinum impregnated lanthanum-titanium-yttrium-zirconium solid solution.

Additionally, the catalyst material of particulate filter 16 can include a promoter oxide(s) such as vanadium, chromium, manganese, iron, cobalt, copper, lanthanum, cerium, praseodymium, neodymium, ytterbium, or a mixture comprising one or more of the foregoing promoter oxides.

The catalyst material can be at a loading sufficient to convert greater than or equal to about 50 vol.% of the water present in the exhaust to hydrogen; e.g., a loading of about 0.05 g/in³ (about 0.003 g/cm³) to about 4.0 g/in³ (about 0.2 g/cm³), with about 0.2 (about 0.01 g/cm³) to about 1.0 g/in³ (about 0.06 g/cm³) preferred. The WGS catalyst metal(s) portion of the catalyst material can be present in an amount of about 0.01 g/in³ (about 0.0006 g/cm³) to about 0.11 g/in³ (about 0.007 g/cm³) of filter element, with about 0.02 g/in³ (about 0.001 g/cm³) to about 0.04 g/in³ (about 0.002 g/cm³) preferred. The promoter oxide(s) can be present in an amount of about 0.1 g/in³ (about 0.006 g/cm³) to about 1.2 g/in³ (about 0.07 g/cm³), with about 0.4 g/in³ (about 0.02 g/cm³) to about 0.7 g/in³ (about 0.04 g/cm³) preferred. The support materials portion can be present in an amount of about 0.7 g/in³ (about 0.04 g/cm³) to about 1.9 g/in³ (about 0.1 g/cm³), with about 1.2 g/in³ (about 0.07 g/cm³) to about 1.6 g/in³ preferred. The promoter oxide and support oxide average particle diameters are less than or equal to about 2 micrometers and are preferably less than or equal to about 10 micrometers, with less than or to about 90 percent of the particles having an average particle diameter of about 3 micrometers to about 6 micrometers preferred, e.g., an average particle diameter of 4.4 micrometers.

The NO_{X} adsorber 18 generally comprises a substrate disposed within a housing, with an optional retention material disposed between the substrate and the housing. Disposed on the substrate are catalytic metal(s), support material(s), and NO_{X} trapping material(s). The catalytic metal, the support material, and the NO_{X} trapping materials can be disposed on the substrate by those methods discussed above with regard to oxidation catalyst 14.

Possible substrate materials for the NO_{X} adsorber 18 include cordierite, mullite, metallic foils, zirconium toughened aluminum oxide, silicon carbide and the like, and mixtures comprising at least one of the foregoing materials. Preferably, the NO_{X} adsorber substrate is a cordierite substrate with an extruded honeycomb cell geometry comprising less than or about 600 cells per square inch, and a wall thickness of less than or equal to about 4.0 mils (about 0.01 cm).

The catalytic metal(s) of NO_{X} adsorber 18 comprises those listed above with respect to oxidation catalyst 14. Where the catalytic metal is a combination of rhodium with one or more other metals, the other metals, e.g., palladium, platinum, and the like, are present in an amount less than the rhodium. For example, with a platinum/rhodium combination, the catalytic metal comprises about 70 wt.% to about 95 wt.% rhodium, with about 85 wt.% to about 95 wt.% preferred, and about 5 wt.% to about 30 wt.% platinum, with about 5 wt.% to about 15 wt.% preferred, based on the total weight of the combination.

The support materials of NO_{X} adsorber 18 can comprise support materials similar to those previously listed above with respect to oxidation catalyst 14. For example, the support materials include, but are not limited to, zirconium oxides, zinc oxide, gamma aluminum oxide, delta aluminum oxide, theta aluminum oxide, stabilized aluminum oxides, alkaline earth aluminates transition metal hexaaluminates, and the like, as well as combinations comprising at least one of the foregoing, and more particularly zinc-zirconium solid solutions.

In addition to the catalytic metal, the support materials is loaded with NO_{X} trapping material(s), such as alkali metal oxides, alkaline earth metal oxides, and mixtures comprising at least one of the foregoing metal oxides. Suitable trapping materials include oxides of barium, strontium, calcium, magnesium, cesium, lithium, sodium, potassium, magnesium, rubidium and the like, and combinations comprising at least one of the foregoing, and more particularly a mixture of oxides of barium and potassium.

The NO_{X} trapping material can be employed at an amount sufficient to adsorb NO_{X}, e.g., at greater than or equal to about 28 wt.%, based on the combined total weight of the catalytic metal, support materials, NO_{X} trapping material, and hydrophobic material ("NO_{X} catalyst combined weight"), with about 4 wt.% to about 28 wt.% preferred, about 8 wt.% to about 22 wt.% more preferred, and about 12 wt.% to about 16 wt.% even more preferred. The catalytic metal can be employed at about 0.1 wt.% to about 4.0 wt.% based on the NO_{X} combined weight. Within this range, greater than or equal to about 0.5 wt.% is preferred, greater than or equal to about 0.75 wt.% is more preferred, and greater than or equal to about 1.0 wt.% is most preferred. Also within this range, less than or equal to about 4.0 wt.% is preferred, less than or equal to about 3.0 wt.% is more preferred, and less than or equal to about 2.0 wt.% is most preferred.

Further, the NO_{X} trapping material can be coated with a hydrophobic material such as titanium oxide. Suitable titanium sources generally include titanium oxychloride, titanium oxynitrate, titanium isobutoxide, titanium n-butoxide, titanium tert-butoxide, titanium ethoxide, titanium isopropoxide, titanium methoxide, titanium n-propoxide and colloidal titanium oxide. Preferably, the hydrophobic material is present in an amount sufficient to render the NO_{X} trapping material hydrophobic, e.g., about 0.1 wt.% to about 2 wt.%, with 0.2 wt.% to about 1 wt.% more preferred, wherein the weight percentages are based on the NO_{X} catalyst combined weight.

The SCR catalyst 20 generally comprises a substrate disposed within a housing, with an optional retention material disposed between the substrate and the housing. Disposed on the substrate are catalytic metal(s), support material(s), and ammonia (NH₃) trapping material(s). Suitable materials for the substrate, housing, optional retention material, catalytic metal, and support material are substantially the same as that used in NO_{X} adsorber 18. Suitable NH₃ trapping materials include vanadium oxides, niobium oxides, molybdenum oxides, tungsten oxides, rhenium oxides, and the like, and combinations comprising at least one of the foregoing.

The catalytic metal can be employed at about 0.01 wt.% to about 4.0 wt.%, based on the total weight of the catalytic metal, catalytic metal support, and NH₃ trapping component. For example, about 0.1 wt.% to about 3.0 wt.% can be employed, with about 0.2 wt.% to about 2.0 wt.% preferably employed.

The NH₃ trapping material(s) can be employed in an amount sufficient to trap NH₃. Generally, it will be employed in amount less than or equal to 32 wt.%, based on the total weight of the catalytic metal component(s), support materials, NH₃ trapping materials, and protective coating material ("SCR catalyst combined weight"). For example, about 2 wt.% to about 18 wt.% can be employed, with about 4 wt.% to about 14 wt.% preferred, and about 6 wt.% to about 10 wt.% more preferred. The catalytic metal can be employed at about 0.01 wt.% to about 4.0 wt.%, based on the SCR catalyst combined weight. For example, about 0.01 wt.% to about 6.0 wt.% can be employed, with about 0.5 wt.% to about 4.0 wt.% preferred, and about 1.0 wt.% to about 2.0 wt.% more preferred.

Preferably, the substrate of SCR catalyst 20 is a cordierite substrate with an extruded honeycomb cell geometry comprising less than 900 cells per square inch, and a wall thickness of less than or equal to 4.0 mils (about 0.01 cm). In addition to the catalytic metal(s), the support materials, and the NH₃ trapping materials, the substrate can comprise a protective coating of phosphate (e.g., metal phosphate) preferably disposed between the substrate and the NH₃ tapping materials. The phosphate reduces fluxing of the porous support due to the NH₃ trapping materials, such as vanadium oxides, niobium oxides, molybdenum oxides, tungsten oxides, and/or, rhenium oxides,

Oxidation catalyst 22 comprises a catalytic metal(s), support material(s), and a substrate(s) disposed with a housing. Suitable materials for catalytic metal(s), support material(s), and substrates include those materials discussed above with respect to oxidation catalyst 14. It is noted that the oxidation catalyst 22 can be employed as a "clean-up" to oxidize any carbon monoxide (CO), ammonia (NH₃), nitrous oxide (N₂O) and/or hydrogen sulfide (H₂S) passing through, for example, SCR catalyst 20 into carbon dioxide (CO₂), nitrogen (N₂), sulfur dioxide (SO₂), and water (H₂O).

A reformer 24 is capable of fluid communication with oxidation catalyst 14, particulate filter 16, NO_{X} adsorber 18, SCR catalyst 20, and/or oxidation catalyst 22. For on-board reforming applications, the reformer 24 is preferably configured for partial oxidation reforming. For example, the reformer 24 is employed in reacting fuel and oxygen (e.g., form air) to produce reformate (e.g., hydrogen, carbon monoxide, partially oxidized organics such as aldehydes, ketones and carboxylic acids, and/or light gasses such as methane, ethane, propane, and/or butane), wherein the reformate is primarily carbon monoxide (CO) and hydrogen gas (H₂). For example, greater than or equal to 80% of the total volume of reformate can be carbon monoxide and hydrogen gas, with greater than or equal to 90% obtainable, exclusive of any nitrogen, argon, or water which can be present as unreacted components introduced with one of more of the feed streams to the reformer. While it is noted that a hydrogen gas to carbon monoxide ratio in the reformate can vary depending on the fuel, the hydrogen gas to carbon monoxide ratio in the reformate can be about 0.8 to about 6.

Reformer 24 comprises a porous substrate(s), a catalytic metal(s), and a support material(s). In an embodiment, the reformer 24 comprises a WGS catalyst that is capable of converting carbon monoxide and water to carbon dioxide and hydrogen gas. For example, the reformer 24 can comprise a first substrate comprising a first catalyst capable of reforming fuels to carbon monoxide and hydrogen, and a second substrate comprising a second catalyst (e.g., WGS catalyst) capable of converting carbon monoxide and water to carbon dioxide and hydrogen gas. In various embodiments, the first catalyst and the second catalyst can be the same, and/or can be disposed on a single substrate.

In an embodiment, the catalytic metal component of reformer 24 is a combination of rhodium with other metals. The other metals, e.g., platinum, and the like, can be present in an amount less than the rhodium. In the case of a platinum-rhodium combination, the catalytic metal component can comprise up to about 95 wt.% rhodium and up to about 30 wt.% platinum, based on the total weight of the catalytic metal. For example, about 2.5 wt.% to about 30 wt.% platinum can be employed, with about 5 wt.% to about 20 wt.% preferred.

The support materials for reformer 24 can include those materials listed above with respect to oxidation catalyst 14. Preferably, the support materials for the reformer 24, include, but are not limited to, hexaaluminates, aluminates, aluminum oxides (e.g., alpha-aluminum oxide, gamma-aluminum oxide, theta-aluminum oxide, delta-aluminum oxide), gallium oxides, zirconium oxides and titanium oxides. Since the reformer is generally subjected to temperatures greater than or equal to 1,200°C, the reformer support is preferably a hexaaluminate. Hexaaluminates are crystalline, porous structures that are able to withstand high temperatures, e.g., temperatures of about 1,000°C to about 1,350°C, without sintering. Other exemplary support materials include alumina (e.g., alpha-aluminum oxide), and various crystalline forms of zirconium oxide, with or without modification by, for example, zirconium (in the case of alumina), yttrium, lanthanum, magnesium, or calcium.

The reformer substrate is preferably capable of operating at temperatures less than or equal to about 1,400°C; capable of withstanding both strong oxidizing and reducing environments in the presence of water containing, for example, hydrocarbons, hydrogen, carbon monoxide, water, oxygen, sulfur and sulfur-containing compounds, combustion radicals, such as hydrogen and hydroxyl ions, and the like, and carbon particulate matter; and has sufficient surface area and structural integrity to support the desired catalytic metal component and support material. Materials that can be used as the reformer substrate include, zirconium toughened aluminum oxide, titanium toughened aluminum oxide, aluminum oxide, zirconium oxide, titanium oxide, as well as oxides, alloys, cermets, and the like, as well as combinations comprising at least one of the foregoing materials, with or without modification by, for example, zirconium (in the case of alumina), yttrium, lanthanum, magnesium, or calcium.

Reformate from reformer 24 can be selectively directed to oxidation catalyst 14, particulate filter 16, NO_{X} adsorber 18, and SCR catalyst 20, wherein the reformate can be employed to regenerated the various system components. For example, reformate can be introduced upstream of oxidation catalyst 14 (disposed upstream of and in direct fluid communication with particulate filter 16) to generate an exotherm. The exotherm can raise the exhaust temperature to a temperature sufficient for regeneration, e.g., a temperature greater than or equal to about 300°C, with greater than or equal to about 350°C more preferred. Additionally, it is noted that the reformate itself can be a source of thermal energy (heat) used in raising the temperature of the device to be regenerated, since the temperature of the reformate at an outlet of the reformer 24 is greater than or equal to about 300°C. In other embodiments, the hydrogen gas of the reformate can be used to produce on-board ammonia, which can be used as part of a NO_{X} abatement strategy. A more detailed discussion of using reformate to selectively regenerate an oxidation catalyst(s), particulate filter(s), NO_{X} adsorber(s), and SCR catalyst(s), as well as a discussion of on-board ammonia production using reformate is found in the parent application to this disclosure, i.e., International Application No. PCT/US04/04093.

While it is noted that carbon monoxide present in the reformate can be advantageous in some applications (e.g., NO_{X} adsorber regeneration), it can be undesirable in other applications. For example, carbon monoxide can affect the ammonia (NH₃) selectivity in a catalytic ammonia generator (not shown). Further, in fuel cell systems, in particular in PEM fuel cells, carbon monoxide can adversely affect the fuel cell through poisoning of the platinum anode, which prevents the utilization of hydrogen fuel employed in the PEM fuel cells. In various embodiments, the carbon monoxide can be removed (e.g., reacted out) of the reformate by water gas shift (WGS), wherein water is reacted with carbon monoxide in a WGS reactor to produce carbon dioxide (CO₂) and hydrogen gas. In various embodiments, a preferential oxidation (PrOx) catalyst can be employed downstream of the WGS reactor, so as to selectively oxidize CO while leaving other reformate products unreacted. In this example, an additional oxidant feed stream can be feed downstream of the WGS reactor.

It has been discovered that exhaust bleed (also referred to as exhaust gas recirculation (EGR)) can be directed to a WGS reactor to supply water for the WGS reaction(s). While the amount of water in the exhaust bleed can vary depending on the fuel, the exhaust bleed generally comprises about 1 vol.% to about 15 vol.% water, wherein volume percents are based on a total volume of exhaust bleed. Additionally, it is noted that the water in the exhaust bleed is generally in the form of steam due to the temperature of the exhaust. In other words, the exhaust bleed provides water to a WGS reactor, without having to employ an external water supply and/or steam generator.

The WGS reactor(s) can be configured for "high" temperature WGS or "low" temperature WGS. The term "high" temperature used in relation to WGS refers to reactions occurring at temperatures greater than or equal to about 350°C, with temperatures of about 600°C to about 800°C generally employed. The term "low" temperature used in relation to WGS refers to temperatures less than or equal to about 300°C, more particularly less than or equal to about 250°C. For example, as will be discussed in greater detail below, the reformer 24 can be configured to act as a high temperature WGS reactor, since the operating temperature of the reformer 24 is greater than or equal to about 350°C. Additionally and/or alternatively, a high temperature WGS reactor can be closely-coupled to reformer 24 (e.g., a reactor located less than or equal to 200 millimeters (mm) away from the reformer 24) such that the high temperature WGS reactor is able to utilize the thermal energy of the reformate from reformer 24 to operate at a temperature greater than or equal to 350°C. An example of a low temperature WGS reactor includes, but is not limited to, a WGS catalyzed particulate filter (e.g., 16). Moreover, it is noted that systems are envisioned comprising a high temperature WGS reactor, a low temperature WGS reactor, and/or a combination comprising at least one of the foregoing.

In an embodiment, the exhaust bleed can be diverted from exhaust conduit 26 via valve 28, which is in fluid communication with reformer 24, which can optionally be in fluid communication with a low temperature WGS reactor (e.g., WGS catalyzed particulate filter 16). In other embodiments, the exhaust bleed can be diverted directly to the low temperature WGS reactor, wherein the low temperature WGS reactor is in fluid communication with reformer 24. In other words, valve 28 can be in direct fluid communication with reformer 24 and/or direct fluid communication with the low temperature WGS reactor (e.g., WGS catalyzed particulate filter 16).

Referring now to Figure 2, a vehicle/fuel cell system generally designated 200 is illustrated. In this embodiment, in addition to the components illustrated in Figure 1, the system 200 further comprises a WGS reactor 30 in fluid communication with reformer 24, and a fuel cell 32. It is noted that fuel cell 32 can provide a source for electricity generation. Reformer 24 is capable of fluid communication with oxidation catalyst 14, particulate filter 16, NO_{X} adsorber 18, SCR catalyst 20, oxidation catalyst 22, WGS reactor 30, and fuel cell 32. Fluid communication can be controlled from reformer 24 to various system components by, for example, valves 34 and 36. Additionally, it is to be understood that the flow paths illustrated in Figure 2 are merely for illustration. In other words, various system designs are envisioned were reformate is supplied directly to NO_{X} adsorber 18, SCR catalyst 20, and the like. Furthermore, a PrOx catalyst (not shown) can be placed in fluid communication with WGS reactor 30 and fuel cell 32, more particularly the PrOx catalyst can be disposed downstream of WGS reactor 30 and upstream of fuel cell 32 (e.g., physically located between WGS reactor 30 and fuel cell 32).

Further, a temperature sensing device (not shown), e.g., a thermocouple can be disposed in operable communication with and downstream of reformer 24. In various other embodiments, additional temperature sensing devices can be disposed within the system, for example, downstream of particulate filter 16 and/or water gas shift reactor 30 (Figure 2). As will be discussed in greater detail below, the temperature sensing device(s) can be used as part of a control system to control the temperature in a given system component, e.g., the reformer 24.

In one embodiment, fuel cell 32 is a proton-exchange membrane (PEM) fuel cell, disposed with an optional heat exchanger disposed in operable communication with WGS reactor 30 and fuel cell 32, so as to control the temperature of fluids entering fuel cell 32. More particularly, the optional heater exchange can be disposed down stream of WGS reactor 30 and upstream of fuel cell 32 (e.g., physically located between WGS reactor 30 and fuel cell 32). In another embodiment, fuel cell 32 is a solid oxide fuel cell ("SOFC"). It is noted that a fuel cell is an energy conversion device that generates electricity and heat by electrochemically combining a gaseous fuel, such as hydrogen (e.g., hydrogen from the reformate), and in the case of SOFC, carbon monoxide and to a limited extent hydrocarbons such as methane, and an oxidant, such as air or oxygen, across an ion-conducting electrolyte. SOFCs are constructed entirely of solid-state materials, utilizing an ion conductive oxide ceramic as the electrolyte. An electrochemical cell in a SOFC is comprised of an anode and a cathode with an electrolyte disposed therebetween.

The electrolyte of the electrochemical cell of the SOFC can be an ion conductor, that is capable of transporting oxygen ions from the cathode to the anode, and that is compatible with the environment in which the SOFC will be utilized (e.g., temperatures of about -40°C to about 1,000°C). Generally, solid electrolyte materials include materials, such as ceramics and/or metals (e.g., alloys, oxides, gallates, and the like), including zirconium, yttrium, calcium, magnesium, aluminum, rare earths, and the like, as well as oxides, gallates, aluminates, combinations, and composites comprising at least one of the foregoing materials. Preferably the electrolyte is a rare earth oxide (such as yttria, gadolinia, neodymia, ytterbia, erbia, ceria, and the like, and mixtures comprising at least one of the foregoing oxides) doped with aliovalent oxide(s) (such as magnesia, calcia, strontia, and the like, and other ⁺2 valence metal oxides).

The anode and cathode of the electrochemical cell(s) of SOFC are generally formed of a porous material capable of functioning as an electrical conductor and capable of facilitating the appropriate reactions. The porosity of these materials are sufficient to enable dual directional flow of gases (e.g., to admit the fuel or oxidant gases and permit exit of the byproduct gases), with a porosity of about 20% to about 40% preferred. The anode and cathode can comprise elements including calcium, zirconium, yttrium, nickel, manganese, strontium, lanthanum, titanium, iron, cobalt, and the like, as well as oxides, alloys and combinations comprising at least one of the foregoing elements such as, for example, perovskite (CaTiO₃).

In operation, air from air source 38 and fuel from fuel source 40 are supplied to engine 12. The type of fuel and the ratio of air to fuel can vary depending on the type of fuel and vehicle system. The fuel is combusted in engine 12 producing exhaust, which comprises carbon monoxide, carbon dioxide, water, hydrocarbons, nitrogen oxides (NO_{X}), unreacted nitrogen and argon, and the like. The exhaust can be supplied to various exhaust treatment components via exhaust conduit 26. In an embodiment, exhaust from engine 12 is in serial fluid communication with an oxidation catalyst 14, a particulate filter 16, a NO_{X} adsorber 18, a SCR catalyst 20, and an oxidation catalyst 22.

With regards to reformer 24, oxygen from oxygen source 42 and fuel from fuel source 44 can be supplied to reformer 24 to produce reformate. Examples of the fuel source 44 include hydrocarbon fuels such as gasoline, diesel, gas-oils, ethanol, methanol, kerosene, and the like; gaseous fuels, such as natural fluid, propane, butane, and the like; and alternative fuels, such as hydrogen, biofuels, dimethyl ether, and the like; as well as combinations comprising at least one of the foregoing fuels. The selection of fuel source 44 is based upon application, expense, availability, and environmental issues relating to the fuel source 40. Preferably, the fuel is diesel fuel. Examples of diesel fuels that can be processed in the reformer 24 include commercial diesel fuels, military diesel fuels, blended diesel fuels containing a larger than normal "light end" component (for example diesel blended with naphtha, kerosene, and/or methanol), intermediate gas-oils, certain light crude oils, and the like, as well as combinations comprising at least one of the foregoing diesel fuels. In various embodiments, oxygen source 42 and fuel source 44 can be the same as air source 38 and fuel source 40, respectively. In another embodiment, oxygen source 42 can be from the exhaust bleed.

In the reformer 24, the fuel is catalytically reformed to produce reformate comprising primarily hydrogen and carbon monoxide. In an embodiment, exhaust bleed is diverted from exhaust conduit 26 to reformer 24 for high temperature water gas shift in the reformer 24 via valve 28. The water present in the exhaust supplied to the reformer 24 can be reacted with the carbon monoxide in a high temperature water gas shift reaction to produce carbon dioxide and hydrogen gas. The resulting reformate from reformer 24 is hydrogen rich, i.e., the reformate comprises less than or equal to 5 vol.% carbon monoxide, with less than or equal to 2 vol.% carbon monoxide preferred, and with less the 10 ppm carbon monoxide especially preferred for some applications, wherein volumetric percents are based on a total reformate volume. For comparison, the reformate generally comprises about 10 vol.% to 30 vol.% carbon monoxide.

Additionally or alternatively, the exhaust bleed can be fed to particulate filter 16 and/or WGS reactor 30, which are each in fluid communication with reformer 24, for low temperature water gas shift. It is noted that a WGS catalyst can be employed in particulate filter 16 such that the particulate filter 16 can act as a WGS reactor. In various embodiments, the WGS reaction is not employed in reformer 24, but rather the WGS occurs,in the particulate filter 16 and/or WGS reactor 30. Advantageously, this allows selective control of the carbon monoxide concentration in the reformate. In other words, reformate produced from the reformer 24 comprising 10 vol.% to 30 vol.% carbon monoxide can be directed to an exhaust treatment system to regenerate a system component where such a carbon monoxide concentration can be advantageous, e.g., in regenerating NO_{X} adsorber.

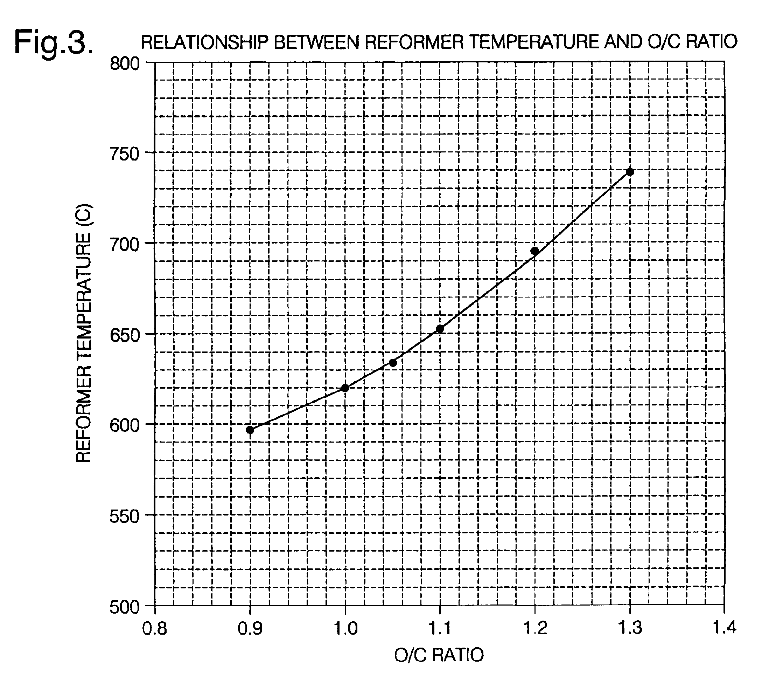

Furthermore, the temperature of reformer 24 can be monitored (e.g., continuously such as every few seconds to minutes, hours, etc.)) and controlled by employing a temperature sensing device disposed proximate to the outlet of the reformer 24. It has been discovered that the temperature in the reformer 24 can be approximated by oxygen to fuel-carbon ration (OCR) in the reformer 24. The converse is also true, i.e., given the temperature of the reformer 24 the OCR can be approximated if necessary taking into account any deactivation of the reforming catalyst and variation in chemical composition of oxygen source 42, fuel source 44, and exhaust bleed from exhaust conduit 26. It is noted that the OCR is a ratio of oxygen atoms present as oxygen gas (O₂) to carbon atoms present in the hydrocarbon fuels. The OCR is greater than 1 to prevent coking in the reformer 24. Preferably, the OCR is about 1.1 to about 1.4, with about 1.1 to about 1.2 more preferred. In other words, the operating temperature of the reformer is preferable about 600°C to about 1,200°C, with about 600 °C to about 1,050 °C more preferred. The relationship between the OCR and reformer temperature can be characterized as being linear as illustrated, for example, in Figure 3.

The temperature sensing device is in operable communication (e.g., electrical communication) with an on-board processing system (e.g., a computer). A signal can be sent from the temperature sensing device to the processing system, wherein the signal is compared to previously received signals and/or a set point. Based on this information, the computer can send a signal to valve 28 to control the flow of exhaust bleed supplied to reformer 24. For example, if the temperature in the reformer is greater than a set point, the flow of exhaust bleed can be reduced or stopped.

The disclosed method of controlling the exhaust bleed flow via valve 28 can be embodied in the form of computer or controller implemented processes and apparatuses for practicing those processes (e.g., on-board computer). It can also be embodied in the form of computer program code containing instructions embodied in tangible media, such as floppy diskettes, CD-ROMs, hard drives, programmable read only memory (PROM), or any other computer-readable storage medium, wherein, when the computer program code is loaded into and executed by a computer or controller, the computer becomes an apparatus for practicing the method. The method can also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the method. When implemented on a general-purpose microprocessor, the computer program code segments configure the microprocessor to create specific logic circuits.

### EXAMPLES

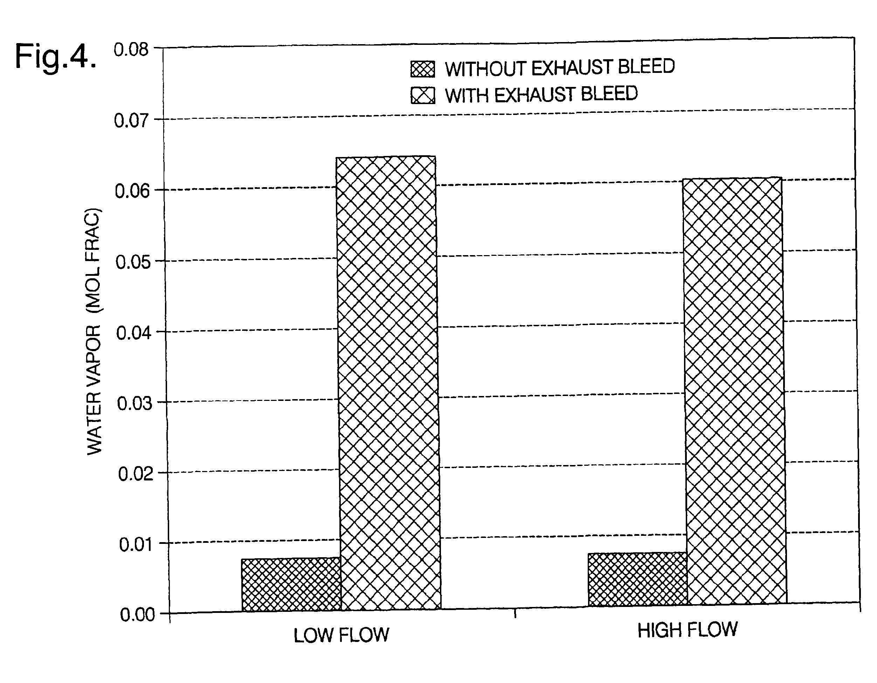

Referring now to Figure 4, a graphical illustration comparing the water availability in reformate with and without an exhaust bleed feed to a reformer is illustrated. This information was generated using computer modeling, e.g., HYSYS process system modeling. The concentration of water vapor was measured in the reformate expressed as a mole fraction in the graph at a low flow rate with and without exhaust bleed feed to the reformer and at a high flow rate with and without exhaust bleed feed to the reformer. The term "high flow" rate as used in these examples refers to a flow rate of 62.68 grams per second (g/s) (engine exhaust) with reformer fuel being feed at a rate of 52 grams per hour (g/hr). The term low flow rate as used in these examples refers to a flow rate of 18.13 g/s (engine exhaust) with reformer fuel being feed at a rate of 7 g/hr. In both the cases, the OCR was 1.05 and the reformer fuel was dodecane (C₁₂H₂₆). It should be noted that with the exhaust bleed feed to the reformer the water concentration in the reformate is about 6 times greater than without the exhaust bleed feed for both high and low flow rates. Moreover, with an exhaust bleed the mole fraction of water in the reformate is greater than or equal to 0.06.

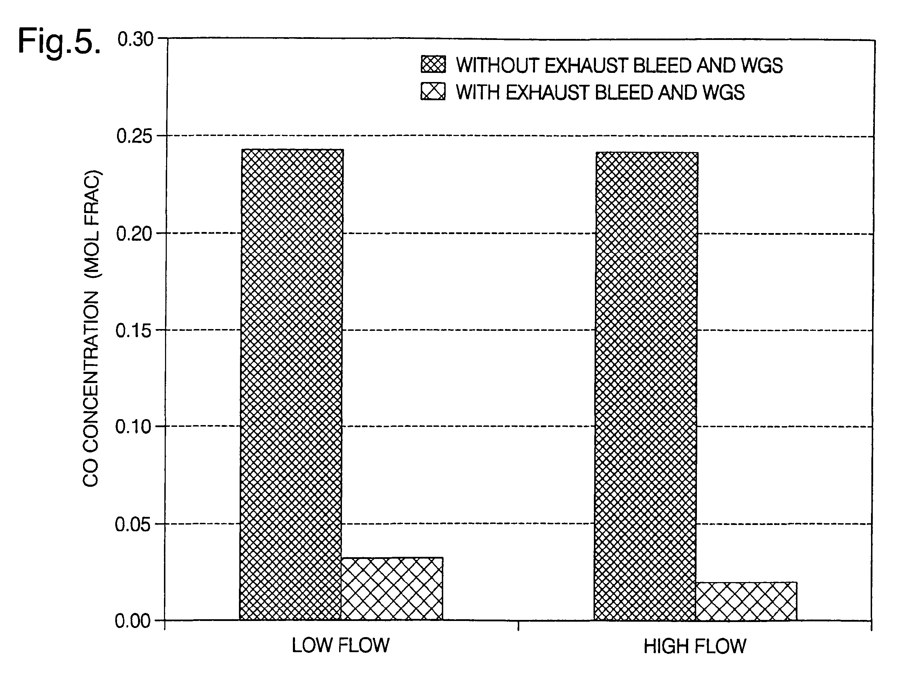

Figure 5 is a graphical illustration comparing the carbon monoxide concentration in an outlet stream of water gas shift (WGS) reactor that is in fluid communication with a reformer with and without an exhaust bleed feed to the reformer. It should be noted that the carbon monoxide concentration in the outflow from a WGS reactor that exhaust bleed has been fed to the reformer is significantly lower compared to the carbon monoxide concentration in the outflow from a WGS reactor that no exhaust bleed has been fed to the reformer. The carbon monoxide concentration in the outflow from the WGS reactor that exhaust bleed has been fed to the reformer comprises a mole fraction less than or equal to 0.05.

Advantageously, the systems disclosed herein provide a means for internally (e.g., not from an outside source) supplying oxygen to a reformer for partial oxidation of fuels. Accordingly, a separate air intake for the reformer can be eliminated, thereby reducing the complexity of the system and reducing the cost of the system. Additionally, the system allows the carbon monoxide concentration in the reformate to be decreased while increasing the hydrogen gas concentration in the reformate, which can be beneficial in applications where carbon monoxide is undesirable (e.g., ammonia generators). More particularly, the water for the water gas shift reaction is advantageously generated as an on-board product, e.g., exhaust bleed. In other words, water can be supplied to a water gas shift reactor without employing an external water source and/or a steam generator. Additionally, embodiments are disclosed herein where the temperature of the reformer can be controlled, thereby reducing the risk of damage to reformer 24 caused by excess temperatures in the reformer.

While the invention has been described with reference to an exemplary embodiment, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A reformer system (100, 200), comprising:
a reformer catalyst capable of reforming a fuel to hydrogen and carbon monoxide, and
a water gas shift catalyst in fluid communication with the reformer catalyst and in fluid communication with an exhaust gas source comprising water, wherein the water gas shift catalyst is capable of reacting carbon monoxide with the water to produce hydrogen and carbon dioxide.

2. The reformer system (200) of Claim 1, further comprising a fuel cell (32) in fluid communication with and downstream of the reformer catalyst and the water gas shift catalyst.

3. The reformer system (200) of Claim 2, further comprising a PrOx catalyst disposed in fluid communication with and downstream of the water gas shift catalyst and in fluid communication with and upstream of the fuel cell (32).

4. The reformer system (200) of Claim 2, further comprising a heater exchanger disposed upstream of the fuel cell (32), wherein the fuel cell (32) is a proton exchange membrane fuel cell.

5. The reformer system (200) of Claim 2, wherein the fuel cell (32) is a solid oxide fuel cell.

6. The reformer system (100, 200) of Claim 1, wherein the reformer catalyst and the water gas shift catalyst are disposed on a reformer substrate of a reformer device (24).

7. The reformer system (100, 200) of Claim 1, wherein the water gas shift catalyst is disposed on a filter element of a particulate filter device (16).

8. The reformer system (100, 200) of Claim 1, wherein the reformer catalyst is disposed on a first substrate of a reformer device (24), and the water gas shift catalyst is disposed on a second substrate of the reformer device (24).

9. The reformer system (100, 200) of Claim 8, further comprising a second water gas shift catalyst disposed on a WGS substrate of a water gas shift reactor (30) disposed downstream of and in fluid communication with the reformer device (24).

10. The reformer system (100, 200) of Claim 1, further comprising an oxidation catalyst device (14) disposed downstream of an engine (12); a particulate filter device (16) disposed downstream of and in fluid communication with the oxidation catalyst device (14); and a NO_{X} adsorber device (18) disposed downstream of and in fluid communication with the particulate filter device (16).

11. The reformer system (100, 200) of Claim 10, further comprising a selective catalytic reduction (SCR) device (20) disposed downstream of and in fluid communication with the NO_{X} adsorber device (18); and a clean-up oxidation catalyst device (22) disposed downstream of and in fluid communication with the NO_{X} adsorber device (18).

12. The reformer system (100, 200) of Claim 1, further comprising a temperature sensor device disposed proximate to an outlet of a device comprising the reformer catalyst.

13. A method of producing hydrogen in a reformer system (100, 200), the method comprising:
supplying a fuel (44) to a reformer catalyst;
supplying exhaust bleed comprising water from an exhaust source to the reformer catalyst;
reforming the fuel using the reformer catalyst to produce hydrogen and carbon monoxide; and
reacting the carbon monoxide with the water from the exhaust bleed using a water gas shift catalyst disposed in fluid communication with and downstream of the reformer catalyst to produce carbon dioxide and hydrogen.

14. The method of Claim 13, further comprising monitoring a temperature of a device (24) comprising the reformer catalyst using a temperature sensing device disposed proximate to an outlet of the device (24).

15. The method of Claim 14, controlling the flow of exhaust bleed based on the temperature of the device (24).

16. The method of Claim 13, wherein the exhaust bleed comprises about 1 vol.% to about 15 vol.% water, wherein volume percents are based on a total volume of the exhaust bleed.

17. A method of using a reformer system (200), the method comprising:
supplying a fuel (44) to a reformer catalyst;
supplying exhaust bleed comprising water from an exhaust source to the reformer catalyst;
reforming the fuel using the reformer catalyst to produce hydrogen and carbon monoxide;
reacting the carbon monoxide with the water from the exhaust bleed using a water gas shift catalyst disposed in fluid communication with and downstream of the reformer catalyst to produce carbon dioxide and hydrogen;
supplying the hydrogen and an oxidant to a fuel cell (32); and
generating electricity using the fuel cell.

18. A method of using a reformer system (100, 200), the method comprising:
supplying a fuel (44) to a reformer catalyst;
supplying exhaust bleed comprising water from an exhaust source (12) to the reformer catalyst;
reforming the fuel (44) using the reformer catalyst to produce hydrogen and carbon monoxide;
reacting the carbon monoxide with water from the exhaust bleed using a water gas shift catalyst disposed in fluid communication with and downstream of the reformer catalyst to produce carbon dioxide and hydrogen; and
supplying the hydrogen to an oxidation catalyst device (14), a particulate filter device (16), a NO_{X} adsorber device (18), or a selective catalytic reduction (SCR) device (20) to selectively regenerate each of the foregoing.

19. A method of using a reformer system (100, 200), the method comprising:
supplying a fuel (44) to a reformer catalyst;
supplying exhaust bleed comprising water from an exhaust source (12) to the reformer catalyst;
reforming the fuel using the reformer catalyst to produce hydrogen and carbon monoxide;
reacting the carbon monoxide with the water from the exhaust bleed using a water gas shift catalyst disposed in fluid communication with and downstream of the reformer catalyst to produce carbon dioxide and hydrogen; and
supplying the hydrogen to an on-board ammonia generator to produce ammonia.
